# EUROPEAN PATENT APPLICATION

(11) **EP 3 244 309 A1**
(43) Date of publication of application: **15.11.2017**
(21) Application number: 16305555.1
(22) Date of filing: 12.05.2016
(51) Int. Cl.: G06F 9/50

(54) **METHOD, SYSTEM AND COMPUTER READABLE MEDIUM TO UPDATE SCHEDULING HINTS**

(71) Applicant: ALCATEL LUCENT, 92100 Boulogne-Billancourt (FR)
(72) Inventor: SCHARF, Michael, STUTTGART, BW (DE)
(74) Representative: Berthier, Karine

(57) **Abstract**

Method, system and computer readable medium to update scheduling hints.The method comprises a step of comparing network policies to configured rules, the configured rules providing additional scheduling hints and if one of the configured rules matches with one of the network policies the method also comprises a step of deriving and storing the additional scheduling hints.

## Description

### FIELD OF INVENTION

The present subject matter relates to the instantiation of elements within different servers. By elements we mean for example Virtual Machines (VMs), containers or other software components that can be placed on different servers. These instantiation of elements are also known as instances. More precisely the aim of the present subject matter is to determine scheduling affinity hints, these scheduling affinity hints could be used during the instantiation of the elements within the different servers, for example how scheduling affinity hints for instances can be inferred from network policy rule specifications that may readily be available, e.g., in a Software Defined Networking (SDN) solution.

### BACKGROUND

In cloud computing platforms, the throughout between different instances such as Virtual Machines (VMs) or containers can significantly depend on the location of those instances. In general, the communication inside one server (also known as host, the terms host and server are used exchangeably in this divulgation) is faster than communication between any two servers, i.e., the throughput is higher and the latency is smaller. If servers are deployed in several locations (e.g., different racks or different geographical locations), the throughput and latency may also depend on the location. It is therefore beneficial to try to assign instances that exchange a large amount of traffic to the same server, or if this is not possible, at least to close servers. Such affinity constraints have to be enforced by the scheduling or placement logic in a cloud platform. A large data plane throughput is in particular crucial for Network Functions Virtualization (NFV).

Current schedulers e.g. in the open source cloud platform OpenStack do not take into account network requirements when deciding on which host a new instance shall be launched. There are already solutions to realize certain forms of affinity. However, the problem how to actually determine these affinity hints is not well solved so far, and existing methods typically require a explicit configuration of pair-wise instance constraints or of groupings.

In many platforms, the connectivity of instances is specified by network policies. The network policies are typically needed for security purposes and currently independent of the placement decisions for instances. Network policies are a fairly general and well-known concept; this divulgation specifically considers policies that describe the connectivity of and between instances, such as firewall policies. Having been configured anyway, these network policies could be leveraged and extended to also affect the affinity in instance scheduling.

The rest of this divulgation mostly focuses on affinity, but it should be noted that a similar problem also exists for anti-affinity scheduling, i.e., two instances should not run at the same node (host), or a set of nodes (hosts). A set of hosts could typically imply a rack, or e.g. a geographical region.

In the present divulgation, the terms "instance" and "Virtual Machine" and the terms "scheduling" and "placement" are used as synonyms. "Instance" and "scheduling" are the corresponding expressions used in the OpenStack open source project. In addition to virtual machines, the term "instance" could also refer to a container (e.g., Docker container). This divulgation does not consider the impact of instance migration.

This divulgation uses the term "affinity hint" since placement affinity is a soft constraint in many embodiments. In general, it depends on the resource utilization in the cloud platform whether all affinity hints can indeed be fulfilled. For instance, if a host can run at most 8 VMs (e.g., because of 8 CPU cores and each VM allocating a core), it will not be possible to fulfill host-affinity placement for 10 VMs. In this case, soft affinity scheduling will launch at least 2 VMs on another host. In contrast, a "constraint" is typically a "hard constraint" and enforced, i.e., the typical system reaction is to reject requests that cannot be served. For the inference system in this divulgation it does not matter whether one determines soft hints or hard constraints, but given that the affinity is not explicitly configured and basically used for optimization, it seems more useful to use soft hints that a scheduler can violate if resources are not available.

### SUMMARY

This summary is provided to introduce concepts related to the determination of scheduling affinity hints.

In one implementation, a method to update scheduling hints is described. The method comprises a step of comparing network policies to configured rules, the configured rules providing additional scheduling hints and if one of the configured rules matches with one of the network policies the method also comprises a step of deriving and storing the additional scheduling hints.

In another implementation, a system to update scheduling hints is described. The system comprises a first module to compare network policies to configured rules, the configured rules providing additional scheduling hints and a second module configured to derive and store the additional scheduling hints, if one of the configured rules matches with one of the network policies.

In another implementation a computer-readable medium is described. The computer-readable medium has embedded thereon a method to update scheduling hints, the method comprises a step of comparing network policies to configured rules, the configured rules providing additional scheduling hints and if one of the configured rules matches with one of the network policies the method also comprises a step of deriving and storing the additional scheduling hints.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1-a and 1-b present a first embodiment of the method of the present subject matter.
Figure 2-a and 2-b present a second embodiment of the method of the present subject matter.
Figure 3-a and 3-b present a third embodiment of the method of the present subject matter.
Figure 4 presents an embodiment of the step 102 of deriving and storing additional scheduling hints.
Figure 5 presents initial and final steps that can be applied to the method according to the different embodiments.
Figure 6 presents an embodiment of the system to determine scheduling affinity hints.
Figure 7 presents another embodiment of the system to determine scheduling affinity hints.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The problem of affinity-based scheduling of resources (e.g., network-aware placement decisions) is well known. In some embodiments theoretical solutions are used, for example for offline placement algorithms, using for example, optimization theory. For instance, the problem of how to embed an overlay graph (e.g., a service function chain) to an underlay network (e.g., a data center) has recently gained a lot of interest.

According to embodiments, there are two known classes of approaches for defining affinity hints for the placement logic in a cloud platform:
1) Grouping: also a so-called "placement group" concept, which allows to assign instances to a group. All instances in this group are ensured to be interconnected by a fast network. The objective of a placement logic is that instances in the same "placement group" will run either on the same host or on a set of hosts with excellent network connectivity. New instances can be marked to belong to a server group and will then be scheduled by either an affinity or anti-affinity rule. This type of grouping is a simple but robust mechanism to ensure affinity for a set of instances.
2) Pair-wise affinity constraints: this embodiment allows the definition of explicit affinity scheduling hints, i.e., when starting a second instance, one can explicitly list one (or several) instances that should be considered for affinity (or anti-affinity) scheduling. Also, in theoretical publications some form of affinity constraints between instances have been considered. This can in particular include also QoS specifications on a minimum bandwidth between instances, or a maximum latency. There are many way how such constraints or hints can be specified. For example the TOSCA language can be used to describe such constraints.

In some embodiments application-level affinity information is used to optimize the provisioning of network resources, e.g., in an SDN controller. With this affinity service, the SDN controller exposes an API that allows higher-level applications to create and share an abstract, topology and implementation independent description of the infrastructure needs, preferences and behaviors of workloads. This embodiment thus combines a grouping and a pair-wise affinity constraint specification. However, this description is used for provisioning of network resources and not for placement decision of instances. Therefore, it does not solve the scheduling problem addressed in the other embodiments of this divulgation.

A cloud platform typically requires the specification of network policies, i.e., connectivity and firewall rules that define how an instance is allowed to communicate, or quotas that limit the network bandwidth. In embodiments of cloud platforms, the definition of network policies for an instance is separated from the specification of compute requirements of a flavor (e.g., number of CPU cores, RAM, ...).

Within the next sections of this divulgation other embodiments will be described. Within these embodiments, network policy models, such as Neutron Group Base Policies GBP in the OpenStack open source project, are used to automatically infer affinity hints from those policies, and/or possibly extend these policies to also provide affinity-related information and for instance placement decisions. Indeed the network policy models define connectivity constraints between instances. Compare to the previously described embodiments, these embodiments will have the following advantages:
1) The grouping in existing platforms has to be configured explicitly, i.e., for each instance the membership of a server group has to be configured or specified.
2) Affinity groupings are a policy concept as well, but different to network policies, i.e., different policies have to be maintained and kept synchronized possibly in different systems.
3) The grouping concept does not scale well if more complex topologies shall be described, e.g., more complex service function chains with complex affinity relations. It is difficult to map service function chain to groupings.

Compare to embodiments of the state of the art, the embodiments of the next sections will have the following advantages:
1) Network policies have to be configured in almost all cloud platforms, since they are essential for security. And they have to be carefully provisioned, possibly with help of sophisticated software tools. Affinity policies can also be understood as one form of network policy. Those existing organizational processes and tools can be reused.
2) Given the existing software solutions for network policies, it seems likely that inter-operability and some convergence on base standards will happen. It is less clear whether there will be a convergence on other forms of specifying pair-wise affinity hints.
3) An organizational issue is that at least in some scenarios understanding the benefit of affinity hints for performance will require networking expertise. This skill set may be present among users of network policy software than users requesting compute resources.

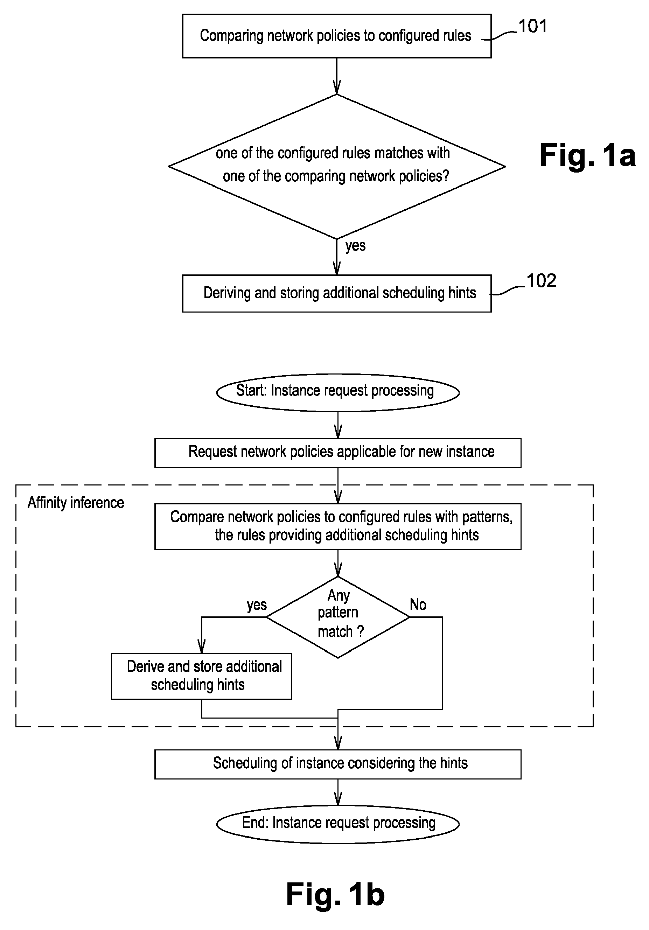

The figure 1-a presents a first embodiment of the method to update scheduling hints, object of an embodiment of the present subject matter. This method comprises:
- a step (101) of comparing network policies to configured rules, the configured rules providing additional scheduling hints
and if one of the configured rules matches with one of the network policies the method also comprising;
- a step (102) of deriving and storing the additional scheduling hints.

By a configured rule matches with a network policy we mean that the network policy respects a test condition associated to the configured rule.

In an embodiment the configured rules are associated to a test condition and the step 101 of comparing network policies is also configured to determine if one of the configured rules respects the test condition of one of the configured rules.

These configured rules set has to be created by expert knowledge, and it may also include administrator insight e.g. in the type of instances uses in a certain zone. In general, it makes sense to define a list of positive criteria that translate a network policy into affinity constraints, while the default action of the inference method is not to deduce affinity for unknown network policy parameters. Otherwise, the system would risk returning a large set of affinity constraints, resulting in a mostly useless set of constraints. There is no single best algorithm how to exactly translate network policies into affinity constraints. A configured rule consists of one or more conditions and an action if one or more of the criteria apply. A condition describes a test condition for one or more attributes for the network policy. Example embodiments for such test conditions could include logical operations of attributes. For instance, a test condition could be a comparison whether a port type in a network policy is equal to a given number. A test condition could also include more complex logical expressions such as string pattern matches. The action is the configured rule is to influence the scheduling by additional scheduling hints.

By network policies we mean connectivity and firewall rules that define how an instance is allowed to communicate, or quotas that limit the network bandwidth. By scheduling hints we mean a statement that describes objectives for the instance placement logic in a cloud platform software. Scheduling hints describe a request for characteristics that a placement decision of that instance on a compute host should meet. This can include requests for characteristics that the target host should fulfill and requests related to other instances placed on that host already. Scheduling hints are specified in a certain machine-readable format that can be understood by the instance placement logic. In embodiments, affinity and anti-affinity objectives scheduling hints are considered. Such scheduling hints can be specified in data formats that describe groupings or pair-wise affinity or anti-affinity constraints.

The figure 1-b presents in another way the method of the figure 1-a. The basic principle of this method is to search through the network policies that apply to a given instance and to determine whether a scheduler hint can be deduced. In this embodiment, the decision to infer a scheduler hint is rule based, i.e., a set of configured rules defines how to handle a given network policy and whether a scheduler hint can be derived.

The configured rules may include patterns, i.e., a scheduler hint is derived if one (or more) of the network policy rules match a pattern. The configured rules can be assumed to be stored in a list.

In case of that a test condition matches, the method determines a scheduler hint and passes that information to the scheduler, which considers these hints in addition to the other scheduling constraints. Scheduler hints in particular include requests for affinity and anti-affinity of the new instance with already running instances.

Only selected parts of a network policy rule are useful to derive scheduling hints such as affinity. Of particular interest are port numbers in firewall rules, since they allow a deduction of the type and amount of traffic that can be expected between instances. Also, QoS configuration such as rate shaper configuration could be used.

Some other embodiments of the previously described method may in particular use rules matching lists of TCP and/or UDP port numbers. For instance, a rule could compare the allowed TCP and/or UDP ports to a list of numbers, and affinity is inferred if the network policies allow forwarding of port numbers included in this list. As an example, a network policy "allow in this zone TCP traffic on ports 50010, 50020, 50075" could help to detect Hadoop nodes and an affinity constraint could be derived from opening the corresponding ports in the firewall.

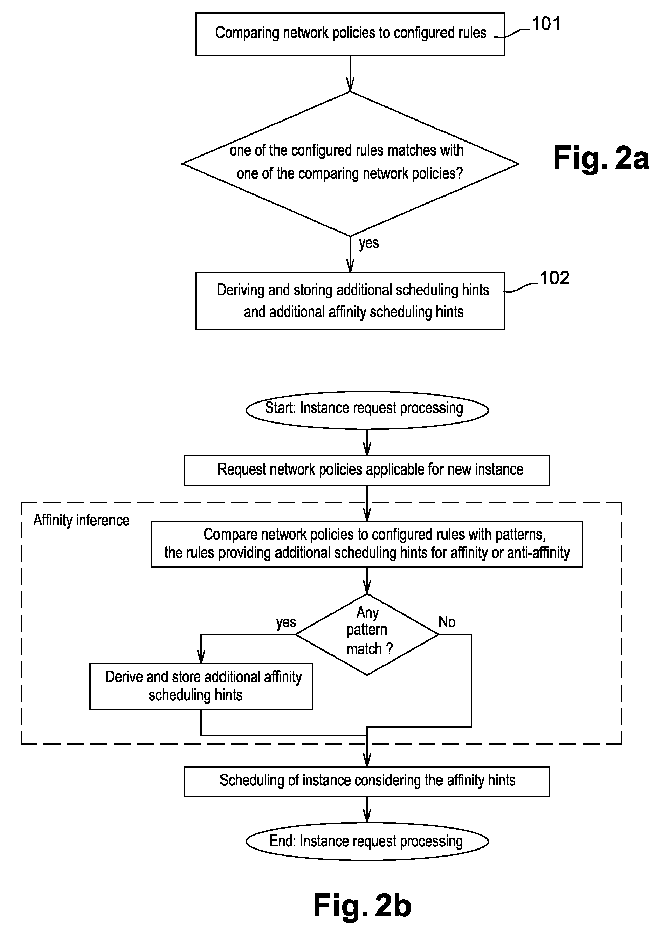

Figure 2-a presents a second embodiment of the method to determine scheduling affinity hints. Within this method the configured rules also provides additional scheduling hints for affinity or anti-affinity and the step 102 of deriving is also configured to derive and store the additional scheduling hints for affinity or anti-affinity.

The figure 2-b presents in another way the method of the previous section.

In a nutshell the method of the figure 2-a or 2-b is a minor modification of the method of the figure 1-a or 1-b. Indeed the figure 1-a or 1-b refers to generic scheduler hints, while figure 2-a or 2-b specifically presents a method in which inference of affinity / anti-affinity is the objective.

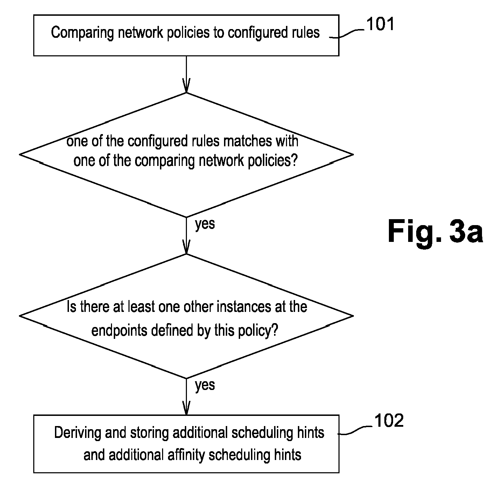

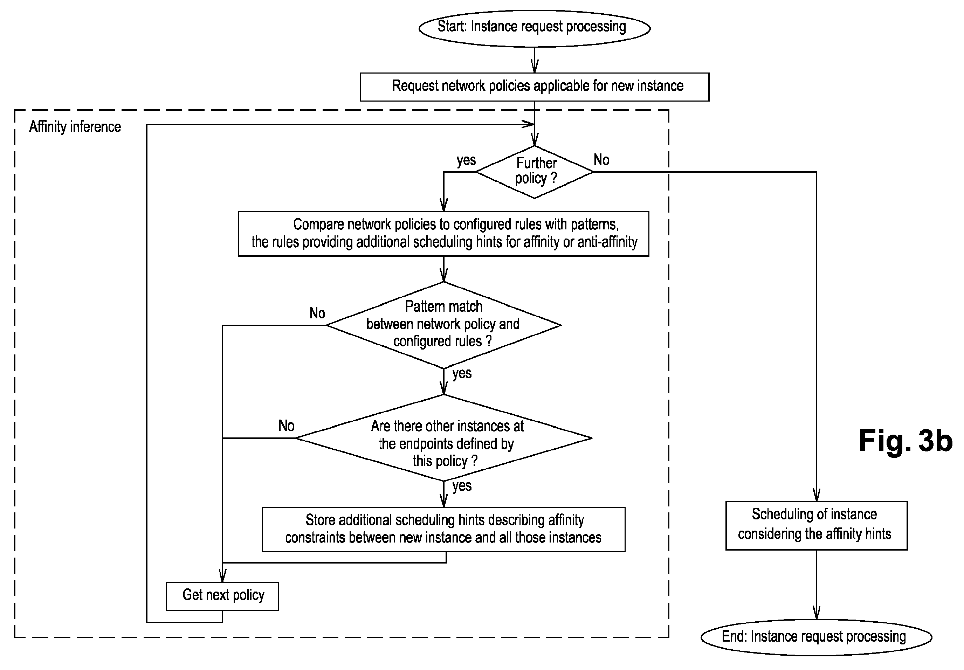

Figure 3-a presents a third embodiment of the method to determine scheduling affinity hints. In this embodiment the step 102 of deriving is realized if one of the configured rules matches with one of the network policies and if there is at least one other instance at the endpoints defined by this network policy. A network policy can refer to logical destinations such as groupings of instances or ports (i.e., zones), IP subnet ranges, other entities. The actual endpoint then implies the set of existing instances in that logical destination. Also in this embodiment the additional scheduling hints describe affinity constraints between a new instance and all those instances.

The figure 3-b presents in another way the method of the previous section. This third embodiment presents a more detailed embodiment of the inference algorithm compared to the two first embodiments. Compared to the first and second embodiment, within this third embodiment it is assumed that there is a list/data structure of network policies that applies to a new instance. Each of these policies is compared to given rules, and in case of a pattern match an affinity constraint is derived. One essential detail of this third embodiment is that for affinity (or anti-affinity) scheduling hints one has to determine which other (already scheduled) instances the network policy refers to i.e., whether there are already instances at the endpoints defined by the policy. For instance, in case of a "Forward port 50010" network policy, one has to analyze the destinations of that policy. Depending on the type of network policy, a policy can affect destinations such as groupings of instances or ports (i.e., zones), IP subnet ranges, other entities. As a given example, a network policy may state "Forward port 50010 to zone 'HadoopCluster"', and the zone 'HadoopCluster' would then be a logical destination. If there were already two instances 'Hadoop1' and 'Hadoop2' in that zone, the instances 'Hadoop1' and 'Hadoop2' would be the endpoints following from this network policy. For a new instance 'Hadoop3' using this network policy, the presented method could then update the scheduling affinity hints by adding affinity hints to 'Hadoop1' and 'Hadoop2' and thereby recommend the scheduler to co-locate 'Hadoop3' with 'Hadoop1' and 'Hadoop2'. In general, a network policy that is currently unused (e.g., because there is no instance in any of the potential destinations) hardly provides insights for affinity scheduling.

In certain embodiments, policies can be defined for certain zones, and an instance can be attached to one or more zones. Network policies can in principle be uni-directional or bidirectional. Uni-directional policies can be ingress or egress policies. In general, the inference should also consider policies for other instances that affect incoming traffic from already running instances to the new one. All network policies that either describe ingress or egress traffic for the new instances have to be analyzed and should be used as intern for the pattern match with the pre-configured inference rules.

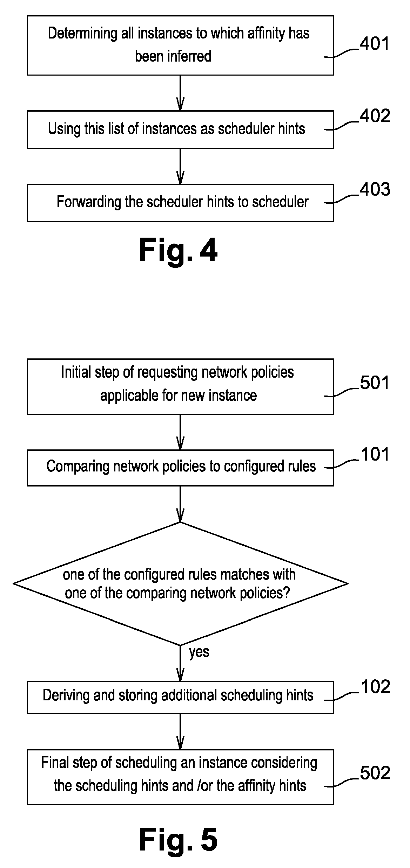

In an embodiment presented figure 4, the step 102 of deriving and storing additional scheduling hints comprises;
- A step 401 of determining instances to which affinity has been inferred and
- A step 402 of determining new scheduler hints using these instances and
- A step 403 of forwarding the new scheduler hints to a scheduler.

The set of instances to which infinity has been inferred follows from the previously presented logic. In the presented example for a new instance 'Hadoop3', this set would include the instances 'Hadoop1' and 'Hadoop2'.

In an embodiment the step 402 of determining new scheduler hints is also configured to create a logical construct including all these instances. The new scheduling hints are the logical construct.

In the embodiment of the previous section describes how the inferred scheduler hints can be stored for further processing by the scheduler, i.e., for the actual selection by hosts. In general, the exact realization of scheduler requests and hints depends on the system. Scheduler hints are for instance a known concept in the OpenStack scheduler, but other cloud platforms may use different formats. Conceptually, there are two different data structures how the affinity (or anti-affinity) hint can be stored:
- First, one can store an explicit list of instances and/or hosts. In that case, the inference algorithm explicitly lists all instances with inferred hints (possibly complementing other hints that are explicitly configured prior to executing the inference system). In case of affinity, the objective is to run the new instance on the same host like all other instances, or, if those instances are spread over several hosts, on one of these hosts. The data format is therefore a list. This methods is supported e.g. in OpenStack as of today, but the lists have to be manually provided.
- Second, the some embodiments of computing managers (such as OpenStack) support groups. For instance, OpenStack Nova supports "server group" with (soft) affinity or (soft) anti-affinity. The scheduler will try to schedule all instances in that server group to the same host, or a small set of hosts. Thus, the outcome of the affinity inference algorithm could also be the definition of such a group, and inclusion of the instance to be scheduler. Such server groups are currently explicitly created in prior art such as OpenStack, e.g., by manual configuration. The inference algorithm would have to dynamically create or change such server groups to ensure that a new instance is within a proper server group. One potential solution would be to create a new server group for each new scheduled instance, and add all other instances with affinity (or anti-affinity) constraints to this group. This approach, however, does not scale well. Another alternative would be to try to reuse a smaller set of existing groups. There are several potential embodiments for how the groups could be handled, and it is difficult to define an algorithm encompassing all potential alternatives.

In an embodiment the scheduler hint is automatically and implicitly inferred.

The figure 5 presents an improvement of the first embodiment of the method. In this improvement the method comprises:
- An initial step 501 of requesting network policies applicable for a selected instance and
- A final step 502 of scheduling the selected instance using the updated scheduling hints.

These final and initial steps can also be added to the other embodiments previously described within this divulgation.

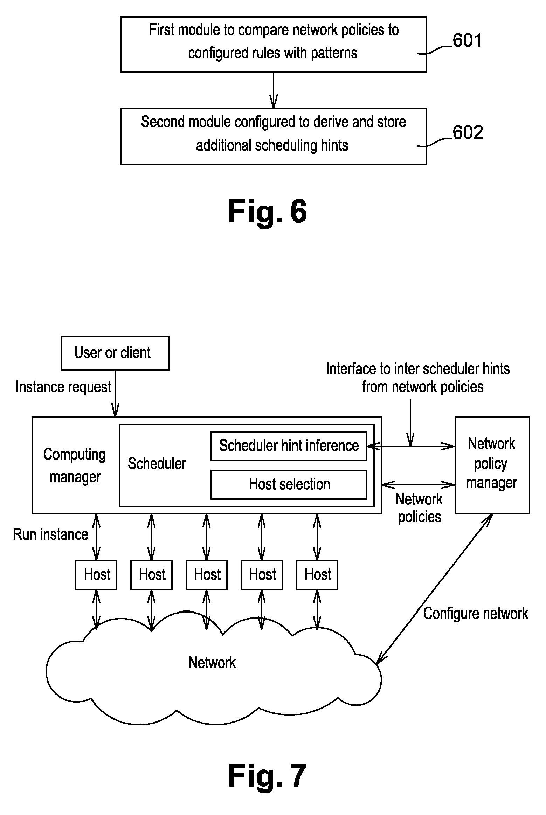

An embodiment of the present subject matter, presented figure 6, is a system to update scheduling hints, the system comprises:
- a first module 601 to compare network policies to configured rules, the configured rules providing additional scheduling hints
- a second module 602 configured to derive and store the additional scheduling hints, if one of the configured rules matches with one of the network policies.

In an embodiment the system comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions of the first and second modules are realized by the processor and may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

The figure 7 presents another embodiment of the system to determine scheduling affinity hints. This figure depicts the main building blocks of an embodiment of the system implemented within a cloud computing platform. A computing manager is a software system that manages the resources on different hosts (server). An important component is the scheduler, which includes the placement logic that decides on which host a new instance (e.g., a Virtual Machine or a container) should be started, e.g., requested by a user or an orchestration system. The scheduler can use different algorithms and heuristics in this host selection component. The scheduler can consist of a configurable sequence of filters and a component (also called weigher). A filter process the list of all hosts and filters out hosts that do not fulfill a certain criteria. Among the remaining hosts that have passed all filters, a component (the so called weigher) determines a ranking of those hosts. In a typical embodiment, this ranking is based on one or more metrics, e.g., the amount of unallocated RAM. The list of candidate hosts is sorted according to the ranking, and finally the best host is selected (or one of the best hosts). This system provides additional scheduling hints for affinity, which can be enforced by corresponding filters and component design to determine the ranking of the hosts (the so called weighers), either existing ones or new ones tailored to be used by this system. A second important component is a network policy manager (this manager can be designed as a disjoint component) that provisions and configures the network connectivity between instances. The system can also include SDN controllers configuring virtual switches in the host and possibly also other network devices. The connectivity between instances is governed by network policies, which include for instance rules what subnet to attach to, firewall rules, rate limits to enforce QoS, or other similar rules. In some embodiments, these network policies are configured in a dedicated application, for instance including also an own user interface. All this functionality can also be included within a unique management component.

One of the advantages of the system previously described is the new scheduler hint inference component that retrieves and processes network policy rules and determines instance scheduling hints from these policies. This new component can be realized by a dedicated component or be integrated into the scheduler. The key objective of the scheduler hint inference is to determine affinity and anti-affinity rules for instances, but the basic architecture is more general and could be used for other scheduling hints as well.

Another advantage of the system previously described is that the affinity inference component uses an interface to the network policy manager to learn about the network policies before an instance is assigned to a host, in order to derive a prior affinity rules.

A person skilled in the art will readily recognize that steps of the methods of the present subject matter can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the present subject matter is computer-readable medium having embedded thereon the method, of the figure 1-a, to update scheduling hints, the method comprising;
- a step (101) of comparing network policies to configured rules, the configured rules providing additional scheduling hints
and if one of the configured rules matches with one of the network policies the method also comprising;
- a step (102) of deriving and storing the additional scheduling hints.

Another embodiments of the present of the present subject matter is computer-readable medium having embedded thereon the method, of the figure 2-a or 3-a, to determine scheduling affinity hints.

## Claims

1. Method to update scheduling hints, the method comprising;
• a step (101) of comparing network policies to configured rules, the configured rules providing additional scheduling hints
and if one of the configured rules matches with one of the network policies the method also comprising;
• a step (102) of deriving and storing the additional scheduling hints.

2. Method according to the claim 1 wherein the configured rules are associated to a test condition and wherein;
• the step (101) of comparing network policies is also configured to determine if one of the configured rules respects the test condition of one of the configured rules.

3. Method according to the claim 1 or 2 wherein;
the configured rules also providing additional scheduling hints for affinity or anti-affinity and wherein;
the step (102) of deriving is also configured to derive and store the additional scheduling hints for affinity or anti-affinity.

4. Method according to claim 1 wherein the step (102) of deriving is realized if;
one of the configured rules matches with one of the network policies and if
there is at least one other instance at the endpoints defined by this network policy
and wherein the additional scheduling hints describe affinity constraints between new instance and all those instances.

5. Method according to any of the previous claims wherein the step (102) of deriving and storing additional scheduling hints also comprising;
• A step (401) of determining instances to which affinity has been inferred and
• A step (402) of determining new scheduler hints using these instances and
• A step (403) of forwarding the new scheduler hints to a scheduler.

6. Method according to claim 5 wherein the step (402) of determining new scheduler hints is also configured:
• to create a logical construct including all these instances and
wherein the new scheduling hints are the logical construct.

7. Method according to any of the previous claims also comprising:
• An initial step (501) of requesting network policies applicable for a selected instance and
• A final step (502) of scheduling the selected instance using the updated scheduling hints.

8. System to update scheduling hints, the system comprising
• a first module (601) to compare network policies to configured rules, the configured rules providing additional scheduling hints and
• a second module (602) configured to derive and store the additional scheduling hints, if one of the configured rules matches with one of the network policies.

9. A computer-readable medium having embedded thereon a method to update scheduling hints, the method comprising;
• a step (101) of comparing network policies to configured rules, the configured rules providing additional scheduling hints
and if one of the configured rules matches with one of the network policies the method also comprising;
• a step (102) of deriving and storing the additional scheduling hints.
